# EUROPEAN PATENT APPLICATION

(11) **EP 3 238 870 A1**
(43) Date of publication of application: **01.11.2017**
(21) Application number: 15873575.3
(22) Date of filing: 21.12.2015
(51) Int. Cl.: B23K 26/364, B23K 26/064

(54) **METHOD FOR FORMING GROOVE IN SURFACE OF STEEL PLATE, AND APPARATUS THEREFOR**

(30) Priority: 24.12.2014 KR 20140188976
(71) Applicant: Posco, Pohang-si, Gyeongsangbuk-do 37859 (KR)
(72) Inventor: KWON, Oh-Yeoul, Pohang-si Gyeongsangbuk-do 37859 (KR); PARK, Hyun-Chul, Pohang-si Gyeongsangbuk-do 37859 (KR); KIM, Jae-Kyoum, Pohang-si Gyeongsangbuk-do 37859 (KR); LEE, Won-Gul, Pohang-si Gyeongsangbuk-do 37859 (KR)
(74) Representative: Zech, Stefan Markus
(86) International application number: PCT/KR2015/014019
(87) International publication number: WO 2016/105048

(57) **Abstract**

Disclosed herein are a method and a device for forming a groove in a surface of a steel sheet. In the method for forming a groove in a surface of a steel sheet, in order to form grooves at a depth of 10% or less of a thickness of the steel sheet in the surface of the steel sheet by irradiating a laser beam, in the case in which laser beams are irradiated from a plurality of laser oscillators to a scan mirror, pass through the scan mirror, and are then irradiated to the surface of the steel sheet, two or more laser beams share one scan mirror with each other to minimize a thermal influence of groove portions at a high line speed of 20mpm or more, thereby accomplishing iron loss improvement characteristics before (after) heat treatment.

## Description

### CROSS-REFERENCE TO RELATED APPLICATION

This application claims priority to and the benefit of Korean Patent Application No. 10-2014-01088976 filed in the Korean Intellectual Property Office on December 24, 2014, the entire contents of which are incorporated herein by reference.

### BACKGROUND OF THE INVENTION

### (a) Field of the Invention

The present invention relates to a method and a device for forming a groove in a surface of a steel sheet. More particularly, the present invention relates to a method and a device for forming a groove in a surface of a steel sheet capable of being applied to a grain-oriented electrical steel sheet process before and after a primary recrystallization and maximizing an iron loss improvement rate by forming a groove in a steel sheet by irradiation of a laser beam regardless of an oscillation manner and a beam mode to improve an iron loss improvement effect regardless of heat treatment.

### (b) Description of the Related Art

For example, a grain-oriented electrical steel sheet has been widely used as an iron core material for energy conversion of an electrical apparatus such as a transformer, or the like, that intends to selectively induce a magnetic field in a rolling direction by growing a texture having a <001> easy magnetization axis in the rolling direction.

Generally, the grain-oriented electrical steel sheet means a material having a texture (also called as a "Goss texture") oriented in a {110}<001> direction, which is the rolling direction, through hot rolling, cold rolling, and annealing processes. In such a grain-oriented electrical steel sheet, the higher the level of the texture oriented in the {110}<001> direction, which is an easy magnetization axis direction of iron, the more excellent the magnetic characteristics of the grain-oriented electrical steel sheet.

A magnetic domain miniaturizing method is a technique used to improve magnetic characteristics of the grain-oriented electrical steel sheet, and may be divided into a temporary magnetic domain miniaturizing method and a permanent magnetic domain miniaturizing method depending on whether or not a magnetic domain miniaturization improving effect is maintained even after stress removal annealing.

The permanent magnetic domain miniaturizing method capable of maintaining an iron loss improving effect even after heat treatment may be divided into an etching method, a roll method, and a laser method. In the etching method, a groove is formed in a surface of a steel sheet by an electrochemical corrosion reaction in an acid solution, such that it is difficult to control a shape of the groove, the groove is formed in an intermediate process for producing the steel sheet (a process before decarbonization annealing or high temperature annealing), such that it is difficult to ensure iron loss characteristics of a final product, the acid solution is used, such that the etching method is not environmentally friendly, and it is difficult to form the groove at a high speed in order to form an appropriate groove depth in the surface of the steel sheet.

In the permanent magnetic domain miniaturizing method by a roll, which is a magnetic domain miniaturizing technique of forming a groove having a predetermined width and depth in a surface of a steel sheet by a pressing method by forming a protrusion shape on the roll, it is difficult to secure stability for machining and stable iron loss depending on a thickness, and a groove forming process is complicated.

In the permanent magnetic domain miniaturizing method for forming a groove by irradiation of a laser beam, a magnetic domain miniaturizing effect may not be secured before heat treatment, and a magnetic flux density is deteriorated after magnetic domain miniaturization.

However, the laser method using a laser beam having a single color may relatively stably form a groove at a relatively low line speed of a steel sheet, as compared with the etching method and the roll method. However, in the case in which a high output laser beam is required in order to form a groove in a surface of a steel sheet moving at a high line speed, a solution for a design of an optical system in which thermal stability of a mirror is considered and a method for configuring an optical system through simplification of a configuration of the mirror is not suggested.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a method and a device for forming a groove in a surface of a steel sheet having advantages of being applied to a grain-oriented electrical steel sheet process before and after a primary recrystallization and maximizing an iron loss improvement rate by forming a groove in a steel sheet by irradiation of a laser beam regardless of an oscillation manner and a beam mode to improve an iron loss improvement effect regardless of heat treatment.

An exemplary embodiment of the present invention provides a method for forming a groove in a surface of a steel sheet, wherein in order to form grooves at a depth of 10% or less of a thickness of the steel sheet in the surface of the steel sheet by irradiating a laser beam, in the case in which laser beams are irradiated from a plurality of laser oscillators to a scan mirror, pass through the scan mirror, and are then irradiated to the surface of the steel sheet, two or more laser beams share one scan mirror with each other to minimize a thermal influence of groove portions at a high line speed of 20mpm or more, thereby accomplishing iron loss improvement characteristics before (after) heat treatment.

The scan mirror may have four or more laser beam incident surfaces to which the laser beams are irradiated.

The laser beam irradiated to the scan mirror may be focused on a focusing mirror and be then irradiated to the surface of the steel sheet.

The laser beam irradiated to the scan mirror may be incident to two or less shaping mirrors, pass through the two or less shaping mirrors, be focused on the focusing mirror, and be then irradiated to the surface of the steel sheet.

In forming linear grooves by one irradiation line in the surface of the steel sheet through irradiation of the laser beam through the scan mirror, two or more to four or less laser beams may share one scan mirror with each other.

In forming linear grooves by one irradiation line in the surface of the steel sheet through irradiation of the laser beam through the scan mirror, the two or less shaping mirrors and one focusing mirror may be used.

Another exemplary embodiment of the present invention provides a device for forming a groove in a surface of a steel sheet, wherein in order to accomplish iron loss improvement characteristics before (after) heat treatment by minimizing thermal influence of groove portions at a high line speed of 20mpm or more at the time of forming grooves at a depth of 10% or less of a thickness of the steel sheet in the surface of the steel sheet by irradiating a laser beam,

Laser beams may be irradiated from a plurality of laser oscillators, and the device for forming a groove in a surface of a steel sheet may include a rotation scan mirror that two or more laser beams share with each other.

The device for forming a groove in a surface of a steel sheet may include a focusing mirror focusing the laser beam reflected from the scan mirror and irradiating the focused laser beam to the surface of the steel sheet.

The device for forming a groove in a surface of a steel sheet may include two or less shaping mirrors having the laser beam reflected from the scan mirror and incident thereto and reflecting the incident laser beam to the focusing mirror.

The scan mirror may be formed in a polyhedral shape having four or more laser beam incident surfaces to which the laser beams are irradiated.

In forming linear grooves by one irradiation line in the surface of the steel sheet through irradiation of the laser beam through the scan mirror, two or more to four or less laser beams may share one scan mirror with each other.

In forming linear grooves by one irradiation line in the surface of the steel sheet through irradiation of the laser beam through the scan mirror, the two or less shaping mirrors and one focusing mirror may be used.

According to an exemplary embodiment of the present invention, it is possible to manufacture a low-iron-loss and a high-magnetic-flux-density grain-oriented magnetic domain miniaturizing product having iron loss improvement effect characteristics of 10% or more after heat treatment without having an influence on formation of primary and second recrystallizations by grooves while forming linear grooves divided into three to eight parts at a depth of 10% or less of a thickness of an electrical steel sheet in a surface of the electrical steel sheet moving at a speed of 0.33m/s or more at ±82-±98° in a rolling direction of the electrical steel sheet.

### BRIEF DESCRIPTION OF THE DRAWINGS

FIG. 1 is a schematic diagram showing a device for forming a groove in a surface of a steel sheet according to an exemplary embodiment of the present invention.
FIG. 2 is a schematic diagram showing an optical system of the device for forming a groove in a surface of a steel sheet according to an exemplary embodiment of the present invention.
FIG. 3 is a diagram showing linear grooves formed in the surface of the steel sheet by the device for forming a groove in a surface of a steel sheet according to an exemplary embodiment of the present invention.
FIG. 4 is an enlarged view showing continuous groove shapes of the linear grooves formed in the surface of the steel sheet of FIG. 3.

### DETAILED DESCRIPTION OF THE EMBODIMENTS

Hereinafter, exemplary embodiments of the present invention will be described with reference to the accompanying drawings so that those skilled in the art to which the present invention pertains may easily practice the present invention. As easily understood by those skilled in the art to which the present invention pertains, exemplary embodiments to be described below may be variously modified without departing from the spirit and scope of the present invention. The same or similar components will be denoted by the same reference numerals throughout the accompanying drawings.

Technical terms used herein are to mention only a specific exemplary embodiment, and are not to limit the present invention. Singular forms used herein include plural forms as long as phrases do not clearly indicate an opposite meaning. A term "including" used in the present specification concretely indicates specific properties, regions, integer numbers, steps, operations, elements, and/or components, and is not to exclude presence or addition of other specific properties, regions, integer numbers, steps, operations, elements, components, and/or a group thereof.

All terms including technical terms and scientific terms used herein have the same meaning as the meaning generally understood by those skilled in the art to which the present invention pertains. Terms defined in a dictionary are additionally interpreted as having the meaning matched to the related art document and the currently disclosed contents and are not interpreted as ideal or formal meaning unless defined.

The present invention requires the following processes in order to stably form grooves in a width direction of a steel sheet at the time of irradiating a high output laser beam at a high line speed of 20mpm or more and minimize a maintenance cost related to an optical system in a magnetic domain miniaturizing method for maximizing an iron loss improvement rate by forming the grooves in a surface of the steel sheet by irradiation of the laser beam.

First, it is preferable to use scan mirrors having excellent thermal stability in the high line speed. In the case of irradiating a laser beam at the same energy density to the surface of the steel sheet regardless of a moving speed of the steel sheet, it is most important to secure thermal stability of the scan mirrors.

Second, it is required to cope with the high line speed while minimizing the number of scan mirrors. Generally, a method for reducing a scan width by increasing the number of scan mirrors in order to cope with the high line speed is a widely used approach, but it is required to minimize the number of scan mirrors in order to minimize a processing cost and an operating cost of an optical system including the scan mirrors. When a width of the steel sheet to which the laser beam is irradiated through the scan mirrors is increased, the number of scan mirrors through which the laser bem is irradiated can not but be increased depending on the increase in the width.

Therefore, it is possible to form the grooves in the steel sheet moving at the high line speed by performing high speed scanning while minimizing a transmission path of the laser beam from a laser oscillator to the steel sheet.

Third, several oscillators may share the scan mirrors with each other to maximize a depth of the grooves formed in the surface of the steel sheet. It is preferable that the grooves formed in the surface of the steel sheet moving at a speed of 20mpm or more are formed at a depth within about 10% of a thickness of the steel sheet, and it is reasonable to increase an output of a laser beam depending on an increase in a speed of the steel sheet in order to form the grooves at the same depth in the surface of the steel sheet regardless of a moving speed of the steel sheet.

However, since a recrystallization after the grooves are formed is thermally affected by an increase in a thermal influence in the vicinity of the grooves formed in the surface at the time of increasing the output of the laser beam, a secondary recrystallization is incompletely formed, such that iron loss and magnetic flux density characteristics may be deteriorated, which is not preferable. When the grooves are formed in the surface of the steel sheet, primary grooves are formed by a low-output laser beam, and secondary grooves are formed, thereby making it possible to alleviate an output limit of the laser beam for forming the grooves and minimize the thermal influence in the vicinity of the grooves.

The present invention is to improve iron loss of an electrical steel sheet by forming grooves at a depth of 10% or less of a thickness of the electrical steel sheet in a surface of the electrical steel sheet moving at a high speed of 20mpm or more and having a width of 900mm or more at ±82-±98° in a rolling (length) direction of the electrical steel sheet.

A target material in which the grooves are to be formed is not limited to the electrical steel sheet. The target material in which the grooves are to be formed may include all of a steel material, a wood material, a plastic, a wafer, a glass, a ceramic material, and the like, in addition to the electrical steel sheet. Hereinafter, an electrical steel sheet will be described as an example of a target material in which grooves are to be formed.

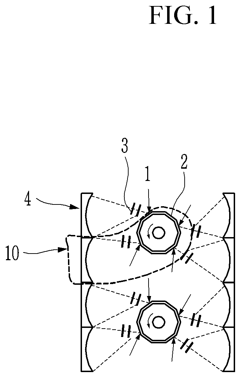

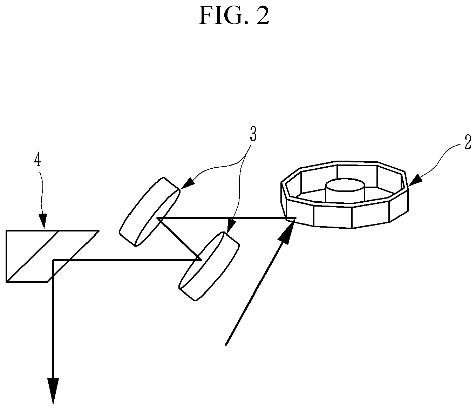

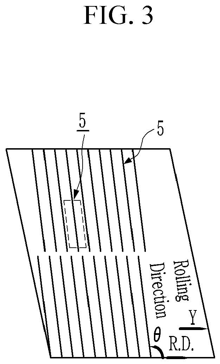

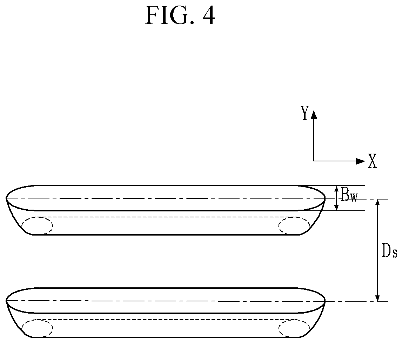

FIG. 1 is a schematic diagram showing a device for forming a groove in a surface of a steel sheet according to an exemplary embodiment of the present invention, FIG. 2 is a schematic diagram showing an optical system of the device for forming a groove in a surface of a steel sheet according to an exemplary embodiment of the present invention, FIG. 3 is a diagram showing linear grooves formed in the surface of the steel sheet by the device for forming a groove in a surface of a steel sheet according to an exemplary embodiment of the present invention, and FIG. 4 is an enlarged view showing continuous groove shapes of the linear grooves formed in the surface of the steel sheet of FIG. 3.

In a method for forming a groove in a surface of a steel sheet according to an exemplary embodiment of the present invention, in order to form grooves at a depth of 10% or less of a thickness of the steel sheet in the surface of the steel sheet by irradiating a laser beam, in the case in which laser beams 1 are irradiated from a plurality of laser oscillators to a scan mirror 2, pass through the scan mirror 2, and are then irradiated to the surface of the steel sheet, two or more laser beams 1 share one scan mirror 2 with each other to minimize a thermal influence of groove portions at a high line speed of 20mpm or more, thereby making it possible to accomplish iron loss improvement characteristics before (after) heat treatment.

The two or more laser beams 1 share one scan mirror 2 with each other. Preferably, two to six laser beams may share one scan mirror with each other.

The scan mirror 2 may be formed in a polyhedral shape having four or more laser beam incident surfaces to which two or more laser beams may be incident so that the two or more laser beams 1 may share the scan mirror 2 with each other.

The laser beam 1 irradiated to the scan mirror 2 may be focused on a focusing mirror 4 and be then irradiated to the surface of the steel sheet.

In addition, the laser beam 1 irradiated to the scan mirror 2 may be incident to two or less shaping mirrors 3, pass through the two or less shaping mirrors 3, be focused on the focusing mirror 4, and be then irradiated to the surface of the steel sheet.

In forming linear grooves by one irradiation line in the surface of the steel sheet through irradiation of the laser beam 1 through the scan mirror 2, two or more to four or less laser beams may share one scan mirror 2 with each other.

In addition, in forming the linear grooves by one irradiation line in the surface of the steel sheet through the irradiation of the laser beam 1 through the scan mirror 2, the two or less shaping mirrors 3 and one focusing mirror 4 may be used.

In a device for forming a groove in a surface of a steel sheet according to an exemplary embodiment of the present invention, in order to accomplish iron loss improvement characteristics before (after) heat treatment by minimizing thermal influence of groove portions at a high line speed of 20mpm or more at the time of forming grooves at a depth of 10% or less of a thickness of the steel sheet in the surface of the steel sheet by irradiating a laser beam, laser beams 1 are irradiated from a plurality of laser oscillators, and the device for forming a groove in a surface of a steel sheet includes a rotation scan mirror that two or more laser beams share with each other.

In addition, the device for forming a groove in a surface of a steel sheet may include the focusing mirror 4 focusing the laser beam 1 reflected from the scan mirror 2 and irradiating the focused laser beam to the surface of the steel sheet.

In addition, the device for forming a groove in a surface of a steel sheet may include the two or less shaping mirrors 3 having the laser beam 1 reflected from the scan mirror 2 and incident thereto and reflecting the incident laser beam 1 to the focusing mirror 4.

However, that is, the shaping mirrors 3 of FIG. 2 may be omitted at the time of changing a shape of the final laser beam 1.

The two or more laser beams 1 share one rotation scan mirror 2 with each other. Preferably, two to six laser beams may share one rotation scan mirror with each other.

The scan mirror 2 may be formed in a polyhedral shape having four or more laser beam incident surfaces to which two or more laser beams may be incident so that the two or more laser beams 1 may share the scan mirror 2 with each other.

In forming the linear grooves by one irradiation line in the surface of the steel sheet through irradiation of the laser beam 1 through the scan mirror 2, two or more to four or less laser beams may share one scan mirror 2 with each other.

In addition, in forming the linear grooves by one irradiation line in the surface of the steel sheet through the irradiation of the laser beam 1 through the scan mirror 2, two or less shaping mirrors 3 and one focusing mirror 4 may be used.

Hereinafter, the method and the device for forming a groove in a surface of a steel sheet according to an exemplary embodiment of the present invention will be described with reference to FIGS. 1 to 4.

As shown in FIG. 1, since the laser beam 1 irradiated from the laser oscillator is incident to an incident surface of the scan mirror 1, for example, an effect obtained using four scan mirrors may be obtained using one scan mirror 2.

FIG. 2 schematically shows a configuration 10 (see FIG. 1) of an optical system for one laser beam irradiated from the laser oscillator shown in FIG. 1. The laser beam 1 irradiated from the laser oscillator passes through the scan mirror 2, the shaping mirrors 3, and the focusing mirror 4, such that a shape of the laser beam 1 is changed, thereby forming continuous linear grooves 5 (see FIG. 3) of four periods or more in the surface of the steel sheet of FIG. 3.

As shown in FIG. 3, the linear grooves formed by the laser beam irradiated from one scan mirror 2 appear in a substantially linear shape, such that the linear grooves are formed in the steel sheet as if they are formed by the laser beams irradiated from two scan mirrors 2.

Therefore, the linear grooves appearing in the surface of the steel sheet and divided from each other appear as if they are largely separated into only two parts, as shown in FIG. 3. In addition, if necessary, positions and the number of laser beams incident to the scan mirror 2 may be selected.

FIG. 4 is an enlarged view showing continuous groove shapes of the linear grooves formed in the surface of the steel sheet of FIG. 3. In FIG. 4, an irradiation interval Ds called a distance between linear grooves may form grooves by two methods.

A first method is to allow linear grooves formed by irradiated laser beams of a left upper end and a right upper end around the scan mirror 2 of FIG. 1 to appear on the same line. Therefore, the linear grooves may be formed at a deeper depth using the low-output laser beam, and the thermal influence generated in the groove portions may be minimized. That is, in the case in which a laser energy density required for forming grooves at a depth of about 15µm in a surface of a grain-oriented electrical steel sheet moving at a speed of 20mpm and having a thickness of, for example, 0.23mm is 1.2J/mm², a required output of laser beams is 900W, but each output of the laser beams required for forming final grooves at a depth of 15µm by again forming linear grooves in a surface in which primary linear grooves are formed is 450W, such that the thermal influence of the groove portions may be minimized. Since the thermal influence of the groove portions formed in the surface of the steel sheet is in proportion to the output of the laser beam, when the output of the laser beam is reduced, the thermal influence in the vicinity of the groove portions is reduced.

A second method is to allow the linear grooves formed by the irradiated laser beams of the left upper end and the right upper end around the scan mirror 2 of FIG. 1 to intersect with each other. The laser beams are irradiated so that the linear grooves intersect with each other, thereby making it possible to form the linear grooves in the surface of the steel sheet at a higher speed.

[Table 1] shows depths of grooves and iron loss improvement rate results in the case in which a scan mirror is shared in a steel sheet moving at a speed of 0.83m/s and having a thickness of 0.23mm.

**[Table 1]**

| Division | Energy Density | B₆ (Tesla) | | W_{17/50} (W/kg) | |
|---|---|---|---|---|---|
| | mJ/mm² | Before Irradiation | After Irradiation | Before Irradiation | After Irradiation |
| Present Invention (Grooves Overlap With Each Other) | 1.5 | 1.915 | 1.910 | 0.83 | 0.73 |
| | 1.5 | 1.915 | 1.910 | 0.83 | 0.73 |
| Present Invention | 1.5 | 1.918 | 1.907 | 0.84 | 0.73 |
| (Gro oves Do Not Overlap With Each Other*) | 1.5 | 1.971 | 1.906 | 0.83 | 0.74 |
| Comparative Example (Not Shared **) | 1.5 | 1.915 | 1.900 | 0.83 | 0.72 |

| | | | | | |
|---|---|---|---|---|---|
| * Magnetic value in the case in which a laser beam is irradiated to left and right symmetrical surfaces of a scan mirror ** Magnetic value in the case in which only one laser beam is irradiated and transmitted to a scan mirror | | | | | |

Here, B₈(Telsa) is a magnetic flux density value represented by Telsa when a strength of a magnetic field is 800ampere/m, and W17/50(W/Kg) is an iron loss value in the case in which a frequency is 50Hz when a magnetic flux density value is 1.7Telsa.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### <Description of symbols>

1: laser beam
2: scan mirror
3: shaping mirror
4: focusing mirror
5: continuous linear groove

## Claims

1. A method for forming a groove in a surface of a steel sheet, wherein in order to form grooves at a depth of 10% or less of a thickness of the steel sheet in the surface of the steel sheet by irradiating a laser beam, in the case in which laser beams are irradiated from a plurality of laser oscillators to a scan mirror, pass through the scan mirror, and are then irradiated to the surface of the steel sheet, two or more laser beams share one scan mirror with each other to minimize a thermal influence of groove portions at a high line speed of 20mpm or more, thereby accomplishing iron loss improvement characteristics before (after) heat treatment.

2. The method for forming a groove in a surface of a steel sheet of claim 1, wherein:
the scan mirror has four or more laser beam incident surfaces that two or more laser beams share with each other.

3. The method for forming a groove in a surface of a steel sheet of claim 2, wherein:
the laser beam irradiated to the scan mirror is focused on a focusing mirror and is then irradiated to the surface of the steel sheet.

4. The method for forming a groove in a surface of a steel sheet of claim 3, wherein:
the laser beam irradiated to the scan mirror is incident to two or less shaping mirrors, passes through the two or less shaping mirrors, is focused on the focusing mirror, and is then irradiated to the surface of the steel sheet.

5. The method for forming a groove in a surface of a steel sheet of claim 3 or claim 4, wherein:
in forming linear grooves by one irradiation line in the surface of the steel sheet through irradiation of the laser beam through the scan mirror, two or more to four or less laser beams share one scan mirror with each other.

6. The method for forming a groove in a surface of a steel sheet of claim 4, wherein:
in forming linear grooves by one irradiation line in the surface of the steel sheet through irradiation of the laser beam through the scan mirror, the two or less shaping mirrors and one focusing mirror are used.

7. A device for forming a groove in a surface of a steel sheet, wherein in order to accomplish iron loss improvement characteristics before (after) heat treatment by minimizing thermal influence of groove portions at a high line speed of 20mpm or more at the time of forming grooves at a depth of 10% or less of a thickness of the steel sheet in the surface of the steel sheet by irradiating a laser beam,
laser beams are irradiated from a plurality of laser oscillators, and the device for forming a groove in a surface of a steel sheet includes a rotation scan mirror that two or more laser beams share with each other.

8. The device for forming a groove in a surface of a steel sheet of claim 7, wherein:
the device for forming a groove in a surface of a steel sheet includes a focusing mirror focusing the laser beam reflected from the scan mirror and irradiating the focused laser beam to the surface of the steel sheet.

9. The device for forming a groove in a surface of a steel sheet of claim 8, wherein:
the device for forming a groove in a surface of a steel sheet includes shaping mirrors having the laser beam reflected from the scan mirror and incident thereto and reflecting the incident laser beam to the focusing mirror.

10. The device for forming a groove in a surface of a steel sheet of claim 8 or claim 9, wherein:
the scan mirror is formed in a polyhedral shape having four or more laser beam incident surfaces that two or more laser beams share with each other.

11. The device for forming a groove in a surface of a steel sheet of claim 10, wherein:
in forming linear grooves by one irradiation line in the surface of the steel sheet through irradiation of the laser beam through the scan mirror, two or more to four or less laser beams share one scan mirror with each other.

12. The device for forming a groove in a surface of a steel sheet of claim 9, wherein:
in forming linear grooves by one irradiation line in the surface of the steel sheet through irradiation of the laser beam through the scan mirror, two or less shaping mirrors and one focusing mirror are used.
